# EUROPEAN PATENT APPLICATION

(11) **EP 3 270 332 A1**
(43) Date of publication of application: **17.01.2018**
(21) Application number: 17180833.0
(22) Date of filing: 11.07.2017
(51) Int. Cl.: G06Q 10/00

(54) **SYSTEM AND METHOD FOR EXCHANGING WASTE SERVICE REGULATION AND HAULER COMPLIANCE DATA**

(30) Priority: 12.07.2016 US 201615208041
(71) Applicant: Rubicon Global Holdings, LLC, Atlanta, GA 30328 (US)
(72) Inventor: RODONI, Philip, Georgia, Atlanta 30030 (US)
(74) Representative: Finnegan Europe LLP

(57) **Abstract**

A system is disclosed for managing waste services. The system may have a memory with computer-executable instructions stored thereon, and a processor. The processor may be configured to execute the instructions to receive, via a first portal, input regarding a regulation for a service vehicle. The processor may also be configured to execute the stored instructions to receive, via a second portal, waste service data associated with monitored operations of the service vehicle. The processor may be further configured to execute the stored instructions to make a determination based on the waste service data regarding the service vehicle being compliant with the waste service regulation, and to show compliance data on the first portal based on the determination and in return for the input.

## Description

### Technical Field

The present disclosure relates generally to a data exchange system and, more particularly, to a data exchange system for waste service regulation/compliance data.

### Background

The performance of waste services may be regulated by municipal, county, regional, state, and federal governments. For example, the transportation, treatment, storage, and/or disposal of many different types of waste may be regulated. In some instances, the regulations imposed by larger governmental bodies may be readily accessible (e.g., via postings on the internet). In other instances, however, the regulations may be more difficult to access (e.g., only by way of paper copies kept at local municipal buildings). The regulations may be similar and/or overlap in some areas, but can also be different and change frequently and/or without notice. Accordingly, it can be difficult for waste service providers to remain knowledgeable and compliant with all of the different regulations. This can be particularly true when the service providers serve a wide area of intersecting regulatory boundaries.

Historically, the service providers remained aware of the ever-changing waste service regulations in one of two ways. First, the providers became aware of a particular regulation when a service vehicle was caught violating the regulation. The provider would be penalized for the violation, but then make changes to accommodate the corresponding regulation in future operations. Obvious drawbacks of this approach include negative impacts on the environment, fines, loss of rights, negative public opinion, loss of customers, etc. Second, the provider could hire professionals whose job it is to actively search out changes to the various regulations and keep the provider updated. This approach, however, can be costly, time consuming, and prone to error.

The disclosed system is directed to overcoming one or more of the problems set forth above and/or other problems of the prior art.

### Summary

In one aspect, the present disclosure is directed to a system for managing waste services. The waste management system may include a memory with computer-executable instructions stored thereon, and a processor. The processor may be configured to execute the instructions to receive, via a first portal, input regarding a regulation for a service vehicle. The processor may also be configured to execute the stored instructions to receive, via a second portal, waste service data associated with monitored operations of the service vehicle. The processor may be further configured to execute the stored instructions to make a determination based on the waste service data regarding the service vehicle being compliant with the waste service regulation, and to show compliance data on the first portal based on the determination and in return for the input.

In another aspect, the present disclosure is directed to method for managing waste services. The method may include receiving, via a first portal, input regarding a regulation for a service vehicle. The method may also include receiving, via a second portal, waste service data associated with monitored operations of the service vehicle. The method may further include making a determination based on the waste service data regarding the service vehicle being compliant with the waste service regulation, and showing compliance data on the first portal based on the determination and in return for the input.

In yet another aspect, the present disclosure is directed to a non-transitory computer readable medium containing computer-executable programmable instructions for performing a method of waste service management. The method may include receiving, via a first portal, input regarding a regulation for a service vehicle. The method may also include receiving, via a second portal, waste service data associated with monitored operations of the service vehicle. The method may further include making a determination based on the waste service data regarding the service vehicle being compliant with the waste service regulation, and showing compliance data on the first portal based on the determination and in return for the input.

### Brief Description of the Drawings

Fig. 1 is a perspective illustration of an exemplary disclosed waste service environment;
Fig. 2 is a diagrammatic illustration of an exemplary disclosed system that may be used to manage the services depicted in Fig. 1; and
Fig. 3 is a flowchart depicting an exemplary disclosed method that may be performed by the system of Fig. 2.

### Detailed Description

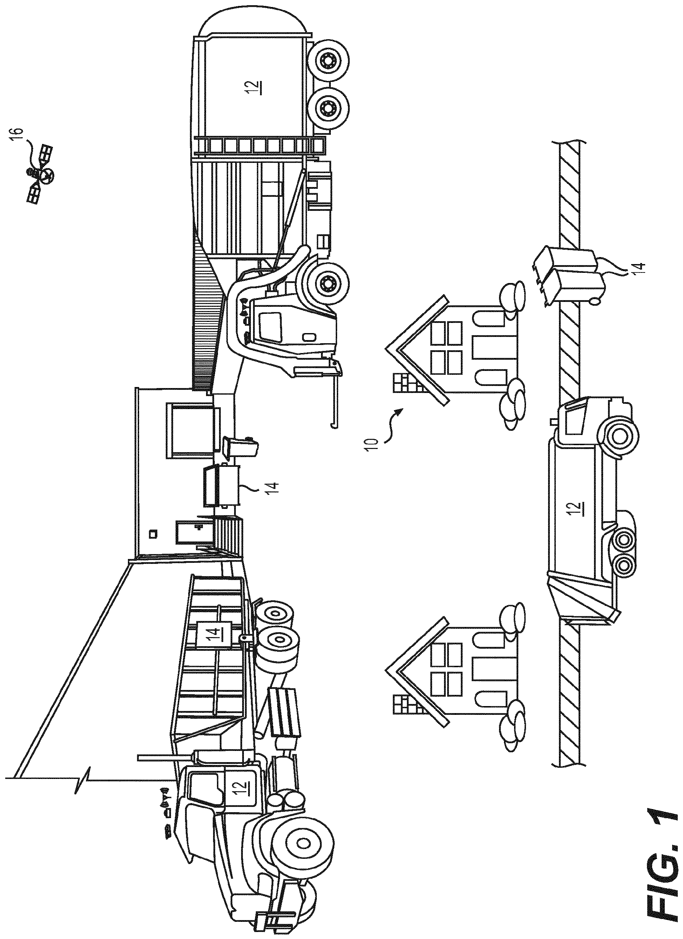

Fig. 1 illustrates an exemplary waste service environment ("environment") 10, at which one or more vehicles 12 are providing service for any number of different customers. Environment 10 could stretch over a wide area and include, for example, a retail store, a factory, a government building, a residential address, and/or another location having one or more receptacles 14 that require the services of vehicles 12. The services may include, for example, the removal of waste materials from inside of receptacle(s) 14; the transportation of the waste materials and/or receptacles 14 to a landfill, recycling center, or sorting facility; containment and/or treatment of hazardous waste materials; waste cleanup; etc.

Vehicles 12 may embody haul trucks (and/or trailers that are attachable to the haul trucks), which include or otherwise carry a storage compartment for holding waste materials. As is known in the art, the storage compartment may have a rear, side, and/or top hatch for receiving materials from receptacles 14, and the waste materials may be manually, automatically, or semi-automatically loaded into the storage compartment of a particular vehicle 12 via the corresponding hatch. For example, management personnel may be able to manually lift and tilt receptacles 14 into the storage compartment of a rear-hatch vehicle 12, thereby emptying receptacle 14 of the associated waste. In another example, vehicles 12 may include mechanical, electrical, and/or hydraulic systems configured to automatically grasp, lift, tilt, and thereby empty receptacles 14 into vehicle 12 via a top-hatch. In yet another example, some tasks (e.g., grasping) may be completed manually and other tasks (e.g., lifting and tilting) may be completed with the assistance of the mechanical, electrical, and/or hydraulic systems via a side-hatch of vehicle 12. In a final example, receptacle 14 may simply be loaded (e.g., manually, automatically, or semi-automatically) together with the waste contents onto vehicle 12 and transported away for emptying at another location.

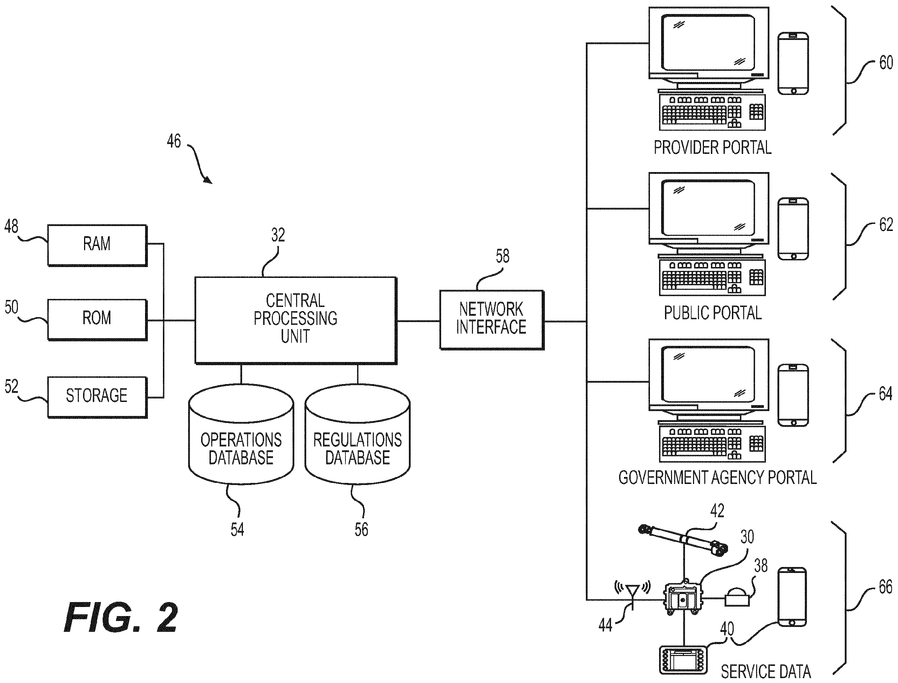

As each vehicle 12 moves about environment 10, a satellite 16 or other tracking device may communicate with an onboard controller 30 (shown only in Fig. 2) to monitor the movements of vehicle 12 and the associated changes made to environment 10 (e.g., pickup, transporting, dumping, placing, etc.). As will be explained in more detail below, onboard controller 30 may network with a central processing unit ("CPU") 32 (e.g., a processing unit located in a back office or other service facility), which may then manage service activities of each vehicle 12 based on these movements and changes.

Onboard controller 30 may include means for monitoring, recording, storing, indexing, processing, communicating and/or controlling other onboard and/or offboard devices. These means may include, for example, a memory, one or more data storage devices, a central processing unit, or any other components that may be used to run the disclosed application. Furthermore, although aspects of the present disclosure may be described generally as being stored in memory, one skilled in the art will appreciate that these aspects can be stored on or read from different types of computer program products or computer-readable media such as computer chips and secondary storage devices, including hard disks, floppy disks, optical media, CD-ROM, or other forms of RAM or ROM.

Onboard controller 30 may be configured to track, assist, and/or control movements of the associated vehicle(s) 12. As shown in Fig. 2, in addition to onboard controller 30, each vehicle 12 could additionally include a locating device 38, and at least one of a manual input device 40 and a sensor 42 mounted or otherwise located onboard each vehicle 12. In some embodiments, vehicle 12 is equipped with both manual input device 40 and one or more sensors 42. Onboard controller 30 may be in communication with each of these other components and/or with CPU 32 at the back office (e.g., via a communication device 44), and configured to determine, based on signals from these components and based on other known information stored in memory, operational characteristics of each vehicle 12 and/or operational characteristics of receptacles 14 (and/or the waste inside of receptacles 14) being moved by and/or in a vicinity of each vehicle 12. The operational characteristics may include among other things, a vehicle identification, a location, a weight, a speed, a waste material type and/or amount, an origination, a destination, vehicle emissions, and other service-related data.

Locating device 38 may be configured to generate signals indicative of a geographical position and/or orientation of vehicle 12 relative to a local reference point, a coordinate system associated with environment 10, a coordinate system associated with Earth, or any other type of 2-D or 3-D coordinate system. For example, locating device 38 may embody an electronic receiver configured to communicate with satellites 16 (referring to Fig. 1), or a local radio or laser transmitting system used to determine a relative geographical location of itself. Locating device 38 may receive and analyze high-frequency, low-power radio or laser signals from multiple locations to triangulate a relative 3-D geographical position and orientation. In some embodiments, locating device 38 may also be configured to determine a location and/or orientation of a particular part of vehicle 12, for example of a receptacle lift. Based on the signals generated by locating device 38 and based on known kinematics of vehicle 12, onboard controller 30 may be able to determine in real time the position, heading, travel speed, acceleration, and orientation of vehicle 12 and the lift mechanism. This information may then be used by onboard controller 30 and/or CPU 32 to update the operational characteristics of vehicles 12 and/or receptacles 14.

Input device 40 may provide a way for an operator of vehicle 12 to input information regarding observances made while traveling around environment 10. For example, the operator may be able to enter a type and/or condition of waste observed at a particular location, an amount of waste in or around receptacle 14, a fill status of a particular receptacle 14, a condition of receptacle 14, a location of receptacle 14, and or other information about receptacle 14 and the waste engaged by, loaded into, or otherwise processed by vehicle 12. The information may be input in any number of ways, for example via a cab-mounted touch screen interface, via one or more buttons, via a keyboard, via speech recognition, via a smartphone carried by the operator, or in another manner known in the art. In some embodiments, in addition to receiving manual input from an operator, input device 40 may also be capable of displaying information, for example an electronic map of environment 10, a schedule, directions, instructions from the back office, payload information, corresponding regulations, etc.

Sensors 42 may be configured to monitor parameters associated with the waste material loaded into vehicle 12 and/or the corresponding receptacle(s) 14 being moved by vehicle 12, and to generate signals indicative thereof. Each of these sensors 42 may be any type of device known in the art, and located anywhere on or in vehicle 12. In one example, sensor 42 may embody any one or more of a load cell, a force gauge, a pressure sensor, or another type of load detector associated with compacting, containing, dumping, lifting, supporting or otherwise moving the waste received from receptacle 14. In this example, the signals generated by sensor(s) 42 may correspond with a lift force and/or a payload weight of vehicle 12 and/or receptacles 14.

Alternatively, one or more sensors 42 may be associated with a power source or drivetrain of vehicle 12, and configured to generate signals indicative of an amount of power used to propel vehicle 12, to drive hydraulics of lift actuators, to move an in-bed compactor, or to shut an associated door. Other types of sensors 42 (e.g., cameras, spectrometers, IR sensors, RADAR sensors, LIDAR sensors, etc.) may also be utilized to determine the operational characteristics of service vehicle 12, the waste material inside receptacles 14, and/or of receptacles 14 themselves. In yet further examples, sensor 42 could be a vibration sensor (e.g., a microphone), an accelerometer, or another similar type of sensor configured to detect engagement conditions, motions, and/or cycle completions during lifting, dumping, shaking and/or travel operations. Other types of sensors 42 may alternatively or additionally be utilized. Signals generated by these sensors 42 may be communicated to onboard controller 30 for further processing.

Onboard controller 30 may be configured to manage communications between other onboard components and CPU 32 located at the back office. For example, onboard controller 30 may receive signals from locating device 38, input device(s) 40, and sensors 42, and correlate the signals, filter the signals, buffer the signals, record the signals, or otherwise condition the signals before directing the signals offboard via communication device 44.

Communication device 44 may be configured to facilitate communication between onboard controller 30 and CPU 32. Communication device 44 may include hardware and/or software that enable the sending and/or receiving of data messages through a communications link. The communications link may include satellite, cellular, infrared, radio, and any other type of wireless communications. Alternatively, the communications link may include electrical, optical, or any other type of wired communications, if desired. In one embodiment, onboard controller 30 may be omitted, and CPU 32 may communicate directly with locating device 38, input device(s) 40, and/or sensor(s) 42 via communication device 44, if desired. Other means of communication may also be possible.

As shown in Fig. 2, onboard controller 30 (along with the other connected onboard components) and CPU 32 may each form a portion of a waste management system ("system") 46 configured to generate, maintain, analyze, compare, send, solicit, confirm, display, receive and/or record information associated with the disclosed concepts. System 46 may include, for example, a random access memory (RAM) 48, a read-only memory (ROM) 50, a storage 52, at least one database (e.g., an operations database 54 and regulations database 56), a network interface 58, and at least one user portal (e.g., a provider portal 60, a public portal 62, a government agency portal 64, and an service portal 66). As will be explained in more detail below, CPU 32 may be configured to receive data from different users via portals 60-66, and to compare, process, record, and share the data with the same and/or with other users via the same or different portals 60-66. It is contemplated that system 46 may include additional, fewer, and/or different components than those listed above. It is understood that the type and number of listed devices are exemplary only and not intended to be limiting.

CPU 32 may include an arrangement of electronic circuitry configured to perform arithmetic, logic, input/output, and control operations during sequential execution of preprogrammed instructions. The instructions may be loaded from ROM 50 into RAM 48 for execution by CPU 32. It should be noted that, although CPU 32 is shown and described as a single "unit", it is contemplated that the functions of CPU 32 could alternatively be completed by any number of co-located or remotely distributed and cooperating processing units, as desired. Numerous commercially available microprocessors may be configured to perform the functions of CPU 32. Further, the microprocessors may be general-purpose processors or specially constructed for use in implementing the disclosed concepts.

Storage 52 may embody any appropriate type of mass storage provided to hold information that CPU 32 may need in order to perform the disclosed processes. For example, storage 52 may include one or more hard disk devices, optical disk devices, or other storage devices that provide sufficient storage space.

Databases 54 and/or 56 may contain any information relating to particular waste service vehicle and regulatory records under analysis. The information stored within databases 54 and/or 56 may come from multiple different sources and be provided at any time and frequency. For example, the information could be manually entered by service provider employees, manually entered by governmental agency employees, manually entered by the general public, and/or automatically entered by onboard controller 30. The information may be entered live (e.g., as the information is collected and/or observed by a vehicle operator and/or the public), entered based on a predetermined schedule (e.g., based on regular downloads of regulation and/or waste service data), continuously streamed (e.g., via a live link to regulation information), intermittently pulled from "the cloud" (e.g., from social media posts about observed service vehicle operations and/or applicable regulations), or obtained in any other manner at any other time and frequency. In addition to the waste service and regulatory information, databases 54 and/or 56 may also include analysis tools for analyzing the information stored therein. CPU 32 may use databases 54 and/or 56 to make comparisons and/or determinations regarding relationships and/or trends relating to particular customers, service vehicles 12, service vehicle drivers, locations, regulations, uses of system 46, and other such pieces of information. CPU 32 may pull information from databases 54 and/or 56, manipulate the information, and analyze the information. CPU 32 may also update the information, store new information, and store analysis results within databases 54 and/or 56, as desired.

CPU 32 may communicate with a user of system 46 (e.g., a user accessing any one of portals 60-66) via network interface 58. Network interface 58 may include, alone or in any suitable combination, a telephone-based network (such as a PBX or POTS), a local area network (LAN), a wide area network (WAN), a dedicated intranet, and/or the Internet. Further, the network architecture may include any suitable combination of wired and/or wireless components. For example, the communication links may include non-proprietary links and protocols, or proprietary links and protocols based on known industry standards, such as J1939, RS-234, RP1210, RS-422, RS-485, MODBUS, CAN, SAEJ1587, Bluetooth, the Internet, an intranet, 802.11 (b, g, n, ac, or ad), or any other communication links and/or protocols known in the art.

Each of portals 60-66 can include one or more of a router, an Ethernet bridge, a modem (e.g., a wired or wireless modem), or any other conventional computing components known in the art (not shown) such as a processor, input/output (I/O) ports, a storage, and a memory. The processor of each portal 60-66 can include one or more processing devices, such as microprocessors and/or embedded controllers. The storage can include volatile or non-volatile, magnetic, semiconductor, tape, optical, removable, non-removable, or other type of computer-readable medium or computer-readable storage device. The storage can be configured to store software programs (e.g., apps) downloaded from CPU 32 via network interface 58 and/or other information that can be used to implement one or more of the disclosed processes. The memory can include one or more storage devices configured to store the downloaded information. Each of portals 60-66 may be able to communicate with CPU 32, with databases 54 and/or 56, and/or directly with another of portals 60-66 via network interface 58.

Each of portals 60-66 may provide a graphical user interface (GUI) that is configured to display information to users thereof, and that includes a means for receiving input from the user. In one embodiment, an exemplary portal is a computer (e.g., a laptop or desktop computer) having a console and a keyboard/mouse. In another embodiment, an exemplary portal is a handheld mobile device, such as a smart phone or a tablet having a touchscreen display and/or a keyboard. Other types of portals may also be utilized. The GUI of portals 60-66 may allow the user to receive (e.g., visually and/or audibly) information from system 46 via network interface 58, to upload information to system 46, and/or to correspond with other users of system 46.

Portal 60 may be dedicated for use by an employee and/or service provider representative of system 46 (e.g., a regulatory controller, an account representative, a service manager, etc.). It is contemplated that any number of portals 60 may be simultaneously connected to network interface 58 for use by any number of different users. Each such portal 60 may allow the representative to log into system 46 (e.g., via a web-based program, an internet site, or a mobile app) and to monitor a particular service event (e.g., a historic event or a live event, such as waste pickup, transportation, and/or disposal), to view a service-related regulation (e.g., use of a particular roadway, maximum allowed vehicle weight, hazardous handling requirements, cleanliness, noise ordinances, allowed operating hours, etc.), to compare aspects of particular service events to aspects of particular regulations, to view public-provided observations of service events (e.g., observations provided via public portal 62) and/or regulations (e.g., regulations provided via government agency portal 64), to reward the public for their observations, to alert operators of compliance issues (e.g., to provide a notification of a regulation change via service portal 66), to reward and/or penalize operators for compliance-related activities (e.g., regulation violations), to share (e.g., publish, post, email, send, announce, etc.) compliance data with the public and/or the government agencies, and/or for other similar purposes.

Public portal 62 may be intended for use by a general member of the public (e.g., a member of the public living in an area serviced and/or traversed by service vehicle 12). It is contemplated that any number of portals 62 may be simultaneously connected to network interface 58 for use by any number of different users. Each such portal 60 may allow the user to access system 46 (e.g., via a web-based program, an internet site, or a mobile app) and to publish information relating to observed operational characteristics of service vehicles 12, regulations pertaining to operation of service vehicles 12, and/or compliance data regarding how the public perceives compliance of service vehicles 12 with existing regulations. Other types of waste service and/or regulatory information may also be input by the general public, if desired.

Portal 62 may also be used to inform and/or selectively reward the public. For example, compliance information regarding how well particular service vehicles 12 and/or service vehicle operators comply with existing regulations may be provided to the general public via portal 62. In addition, in some instances, members of the public may be selectively rewarded for interacting with system 46 (e.g., for providing input such as observed operations, regulations, and compliance perception). The rewards may include, for example, credit towards future waste services.

Government agency portal 64 may be dedicated for use by a government agency representative (e.g., a representative responsible for waste service regulations). It is contemplated that any number of portals 64 may be simultaneously connected to network interface 58 for use by any number of different representatives associated with the same or different government agency (e.g., by a federal, state, or local agency). Each such portal 64 may allow the representative to log into system 46 (e.g., via a web-based program, an internet site, or a mobile app) and to view regulations existing in database 56, to update the regulations, to remove regulations, and to respond to open inquiries regarding past, current, and/or proposed regulations.

Portal 64 may also be used to inform and/or selectively incentivize the government agencies. For example, compliance information regarding how well particular service vehicles 12 and/or service vehicle operators comply with existing regulations may be provided to the corresponding government agency via portal 64, in return for keeping system 46 updated with the latest regulations.

Service portal 66 may be dedicated to the input of information generated onboard vehicles 12 and/or for the general use by vehicle operators. In some examples, the information is automatically provided by way of locating device 38 and sensors 42. In other examples, the information is manually provided by way of input device(s) 40. The information may include, for example, the location of each vehicle 12, a travel path, a schedule of stops, a status of a particular service event (e.g., if the service has been started, is ongoing, has been completed, or is problematic), an origination of waste material being transported by a particular service vehicle 12, a route of the service vehicle, a destination, and other information. It is contemplated that the functionality of service portal 66 could alternatively be provided by way of provider portal 60 (or another portal), if desired.

Portal 66 may also be used to inform, alert, reward, and/or penalize particular service vehicle operators. For example, compliance information regarding how well particular service vehicles 12 and/or service vehicle operators comply with existing regulations may be provided via portal 64, along with corresponding rewards and/or penalties (e.g., financial, opportunity, and/or ranking rewards and penalties).

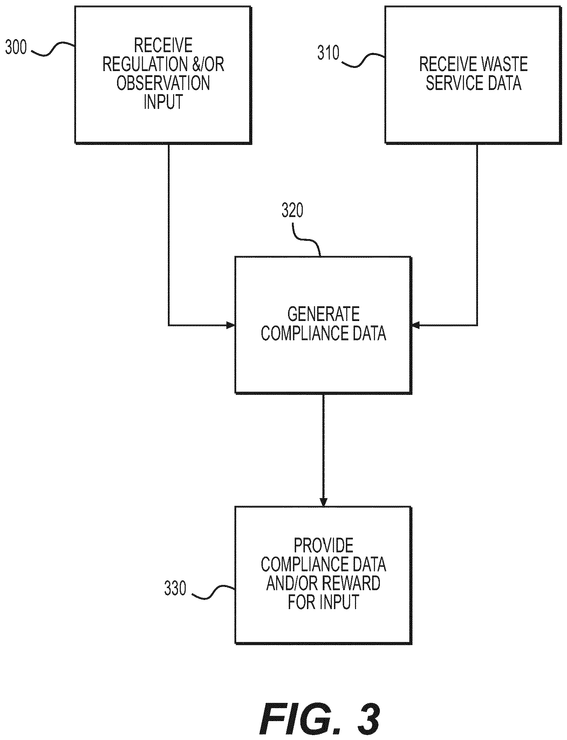

Based on the information received from portals 60-66, CPU 32 can be configured to execute instructions stored on computer readable medium to perform methods of waste service management at environment 10. For example, CPU 32 may be configured to monitor service as it is being performed, to compare the service to applicable regulations, and to provide feedback (e.g., to the service provider, the operators, the public, the government agencies, etc.) based on the monitored service, the regulations, and the comparisons. This process is illustrated in Fig. 3, and will be explained in more detail in the following section to further illustrate the disclosed concepts.

### Industrial Applicability

The disclosed system may be applicable to the waste service industry, where service vehicles 12 operate across overlapping regulatory boundaries. The disclosed system may consider operational characteristics of individual service vehicles, regulator information from different agencies, and public opinion, and produce compliance data associated with the information. The compliance data may be provided to interested agencies in return for cooperatively providing the information. In addition, some of the entities may be selectively rewarded for their cooperation and/or their part in making operation of service vehicles 12 compliant with the applicable regulations. Operation of system 46 will now be described with reference to Fig. 3.

As shown in Fig. 3, operation of system 46 may begin with the receipt of regulation and/or observation input by CPU 32 (Step 300). As described above, this input may include regulations pertaining to waste service activities for a particular municipality, area, region, county, state, and/or country that are received via portal 64. For example, a local regulatory controller for a small town may log into system 46 via portal 64 and report a new or changing regulation requiring a heavily loaded service vehicle 12 to follow a detour route around the town during spring thaw that occurs within a particular time window. In another example, a state regulatory controller may provide weekly updates regarding regulation changes associated with the transportation of certain types of waste. In addition, the input received by CPU 32 at step 300 may include observations made by the general public via portal 62, such as observations regarding regulations, regarding operation of service vehicles 12, and/or regarding compliance of service vehicles 12 with particular regulations. For example, the public may provide the local regulation update (e.g., when the small town does not employ a local regulator controller) and/or report on a particular service vehicle 12 failing to follow the detour route. As also described above, the input received at step 300 may be received at any time, intermittently, periodically, and/or continuously. The input received at step 300 may be stored, for example, within regulations database 56.

Simultaneous with the receipt of input from governmental agencies and/or the public, waste service data may be received by CPU 32 (Step 310). As described above, this data may be provided via portal 66 and include, for example, data monitored from onboard service vehicle 12. This data could include, among other things, a vehicle identification, a waste origination, a pickup schedule, a transportation route, tracked location information, a waste destination, a type of waste, an amount (e.g., volume, weight, etc.) of waste, etc. The waste service data may be provided by locating device 38, by the operator of service vehicle 12 (e.g., via input device 40), and/or by sensor(s) 42. The waste service data may be transmitted live by onboard controller 30 to CPU 32 (e.g., via communication device 44) and/or downloaded at any appropriate time. The waste service data received at step 310 may be stored, for example, within operations database 54.

CPU 32 may then be configured to compare the waste service data stored in operations databased 54 with the regulations and/or observation input stored in regulations database 56 to determine a compliance of service activities with the regulations (Step 320). In particular, CPU 32 may be configured to determine if each service vehicle 12 and/or each operator of each service vehicle 12 is compliant with the applicable regulations. For example, based on the location of vehicle 12 provided by locating device 38, CPU 32 may determine if vehicle 12 is following an allowed route or violating a regulation associated with a particular roadway. Similarly, based on the weight of vehicle 12 provided by one or more sensor(s) 42, CPU 32 may determine if vehicle 12 is properly loaded for local bridge limits. Finally, based on a type of waste material loaded into vehicle 12, an origin of the waste, and a disposal location (e.g., as reported by the operator via input device 40, by sensor(s) 42, and/or by locating device 38), CPU 32 may determine if proper disposal regulations have been followed. In some embodiments, parameters associated with the compliance data may also be generated by CPU 32. For example, CPU 32 may be configured to calculate an amount (e.g., a percent) of an activity that is compliant; a number of compliant activities; a ratio of compliant-to-noncompliant activities; a compliance ranking of service vehicles 12 and/or of operators; etc.

In return for the input received at step 300 (and as an incentive for future input), CPU 32 may be configured to voluntarily post the compliance data and/or provide other rewards (Step 330). In particular, although the government agencies may not require a report of waste service compliance, CPU 32 may selectively provide some or all of the compliance data (e.g., the parameters associated with the compliance data) to government agency portal 64 and/or public portal 62. This information may not necessarily identify particular non-compliant service vehicles 12 and/or operators, but still allow the government agencies to better focus their regulatory efforts and target areas of lower compliance. In addition, the compliance data may provide a sense of security to the general public that the activities are being performed in a responsible manner. In some instances, the participating members of the general public may additionally be financially rewarded. For example, the participating members may be remunerated with credit for future waste services in return for their input.

In some instances, the compliance data may additionally be provided to the service vehicle operators (e.g., via portal 66). The compliance data may be provided in the form of an alert indicating that a particular violation may have occurred, a reward for being compliant, a ranking of compliant operators, and/or an elevated status as a preferred operator. The compliance data and/or the alert may be triggered by and/or incorporate data generated by locating device 38, sensor(s) 42, and/or input device(s) 40. For example, route information, boundary information, detour information, weight information, disposal information, noise information, and other similar information may be generated by these onboard devices and used to trigger the alert and/or displayed to the operator alone or in conjunction with the corresponding regulations. For instance, a current weight measured by sensor(s) 42 and a weight limit may be displayed together on input device 40, along with an instruction to reduce payload in order to be compliant with the corresponding regulation.

The disclosed system may help waste service providers to remain updated on and compliant with ever-changing service regulations. In particular, the regulatory government agencies and/or the general public may be incentivized by the disclosed system to regularly provide the updates. This strategy may reduce a burden on the waste service providers, while also helping to improve a compliance with the regulations.

It will be apparent to those skilled in the art that various modifications and variations can be made to the disclosed system. Other embodiments will be apparent to those skilled in the art from consideration of the specification and practice of the disclosed system. It is intended that the specification and examples be considered as exemplary only, with a true scope being indicated by the following claims and their equivalents.

## Claims

1. A system for managing waste services, comprising:
a memory having computer-executable instructions stored thereon; and
a processor configured to execute the instructions to:
receive, via a first portal, input regarding a regulation for a service vehicle;
receive, via a second portal, waste service data associated with monitored operations of the service vehicle;
make a determination based on the waste service data regarding the service vehicle being compliant with the regulation; and
show compliance data on the first portal based on the determination and in return for the input.

2. The system of claim 1, wherein:
the first portal is a government agency portal; and
the second portal is a service provider portal.

3. The system of claim 1, wherein:
the first portal is a public portal; and
the second portal is a service provider portal,
optionally wherein the processor is further configured to provide credit for future waste services to a user of the public portal in return for the input,
and/or optionally wherein the processor is further configured to receive, via the first portal,
input regarding observed compliance of the service vehicle with the regulation.

4. The system of claim 1, 2, or 3, wherein the waste service data includes onboard data collected from the service vehicle during operation,
optionally wherein the onboard data includes at least one of a service vehicle identification, a service vehicle weight, a waste type, a waste origin, a waste destination, vehicle emissions, and a service route, and/or optionally further including a plurality of sensors configured to collect the onboard data.

5. A method for managing waste services, the method comprising:
receiving, via a first portal, input regarding a regulation for a service vehicle;
receiving, via a second portal, waste service data associated with monitored operations of the service vehicle;
making a determination based on the waste service data regarding the service vehicle being compliant with the regulation; and
showing compliance data on the first portal based on the determination and in return for the input.

6. The method of claim 5, wherein:
the first portal is a government agency portal; and
the second portal is a service provider portal.

7. The method of claim 5, wherein:
the first portal is a public portal; and
the second portal is a service provider portal,
optionally further including providing credit for future waste services to a user of the public portal in return for the input,
and/or optionally further including receiving, via the first portal, input regarding observed compliance of the service vehicle with the regulation.

8. The method of any of claims 5 - 7, further including collecting the waste service data from onboard the service vehicle during operation, optionallywherein the waste service data includes at least one of a service vehicle identification, a service vehicle weight, a waste type, a waste origin, a waste destination, and a service route.

9. A non-transitory computer readable medium containing computer-executable programming instructions for performing a method of waste service management according to any of claims 5 - 8.
